# EUROPÄISCHE PATENTANMELDUNG

(11) **EP 3 315 343 A1**
(43) Veröffentlichungstag der Anmeldung: **02.05.2018**
(21) Anmeldenummer: 17198300.0
(22) Anmeldetag: 25.10.2017
(51) Int. Cl.: B60K 17/28, B60K 25/06, B60R 16/03

(54) **LANDWIRTSCHAFTLICHES NUTZFAHRZEUG MIT ZAPFWELLE UND VERFAHREN ZUM ANTRIEB DER ZAPFWELLE**

(30) Priorität: 28.10.2016 DE 102016221311
(71) Anmelder: Deere & Company, Moline, IL 61265 (US)
(72) Erfinder: Gresch, Valentin, 68163 Mannheim (DE); Kremmer, Martin, 68163 Mannheim (DE)
(74) Vertreter: Dehnhardt, Florian Christopher

(57) **Zusammenfassung**

Die Erfindung betrifft ein landwirtschaftliches Nutzfahrzeug (10) mit einer mittels eines Verbrennungsmotors (16) antreibbaren Arbeitszapfwelle (22) für den Betrieb eines Arbeitsgerätes (20). Weiterhin weist das Nutzfahrzeug (10) eine Zusatzzapfwelle (28) auf, welche von einer Energiespeicher-Vorrichtung (26) antreibbar ist und mit der Arbeitszapfwelle (22) derart gekoppelt ist, dass die Arbeitszapfwelle (22) zumindest zeitweise zusätzlich von der Zusatzzapfwelle (28) angetrieben ist.

## Beschreibung

Die Erfindung betrifft ein landwirtschaftliches Nutzfahrzeug mit einer Zapfwelle zum Betrieb eines Arbeitsgerätes. Weiterhin betrifft die Erfindung ein Verfahren zum Antrieb einer Zapfwelle eines landwirtschaftlichen Nutzfahrzeugs.

Aus US 2010/0115902 A1 ist ein Arbeitssystem bestehend aus einem Traktor und einer Quaderballenpresse bekannt. Die Quaderballenpresse wird über eine Heckzapfwelle des Traktors betrieben. Die Heckzapfwelle wiederum ist über ein Getriebe vom Verbrennungsmotor des Traktors angetrieben. Abhängig von den ermittelten Lastdaten der Quaderballenpresse wird ein Ausgangsdrehmoment des Verbrennungsmotors modifiziert.

Der Erfindung liegt die Aufgabe zugrunde, eine Zapfwelle eines landwirtschaftlichen Fahrzeugs für den Betrieb eines Arbeitsgerätes mit geringem Aufwand energiesparend anzutreiben.

Diese Aufgabe wird gemäß den Merkmalen der unabhängigen Patentansprüche 1 und 10 gelöst. Vorteilhafte Ausführungsformen sind den Unteransprüchen entnehmbar.

Gemäß Patentanspruch 1 weist das landwirtschaftliche Nutzfahrzeug (z.B. ein Schlepper oder Traktor) einen Verbrennungsmotor auf, der - insbesondere über eine geeignete Kupplung, Getriebestufe oder dergleichen - eine Zapfwelle des Nutzfahrzeugs antreibt. Diese Zapfwelle (nachfolgend "Arbeitszapfwelle") wiederum betreibt mit ihrer Bewegungsenergie ein Arbeitsgerät (z.B. eine Großballenpresse). Weiterhin weist das Nutzfahrzeug eine weitere Zapfwelle (nachfolgend "Zusatzzapfwelle") auf, welche von der gespeicherten Energie einer Energiespeicher-Vorrichtung antreibbar ist. Dabei ist vorgesehen, dass die Zusatzzapfwelle mit der Arbeitszapfwelle derart gekoppelt ist, dass die Arbeitszapfwelle zumindest zeitweise nicht nur vom Verbrennungsmotor, sondern zusätzlich auch von der Zusatzzapfwelle angetrieben ist.

Auf diese Weise können zeitlich punktuell oder zyklisch auftretende Spitzenlasten des Arbeitsgerätes, welche über deren Getriebe an die Arbeitszapfwelle des Nutzfahrzeugs weitergegeben werden, an der Arbeitszapfwelle ausgeglichen werden, indem diese zeitweise zusätzlich von der Zusatzzapfwelle angetrieben wird. Hierdurch können auf technisch einfache Weise herkömmliche Effekte bei dem Betrieb des Arbeitsgerätes verringert oder vollständig vermieden werden, wie z.B. ein Abfall der Drehzahl des Verbrennungsmotors und der Geschwindigkeit des Nutzfahrzeugs bei auftretenden Drehmoment- bzw. Lastspitzen an der Arbeitszapfwelle. Hierdurch wird der Verbrennungsmotor des Nutzfahrzeugs sowie ein gleichmäßiger Arbeitsbetrieb des Arbeitsgerätes unterstützt. Außerdem ist es möglich, den Verbrennungsmotor in einem eher stationären Zustand zu betreiben, wodurch eine entsprechende Reduzierung des Kraftstoffverbrauchs und der Emissionswerte erzielt wird.

Der Begriff "zumindest zeitweise" umfasst insbesondere definierte bzw. vorbestimmte Zeitpunkte oder Zeiträume, in denen die Zusatzzapfwelle von der Energiespeicher-Vorrichtung angetrieben und mit der Arbeitszapfwelle antriebsmäßig gekoppelt ist. In diesen Zeitpunkten bzw. Zeiträumen befindet sich die Zusatzzapfwelle dann in einem Unterstützungsmodus zur Unterstützung des Drehantriebs der Arbeitszapfwelle.

Abhängig von der jeweiligen Ausführungsform des Nutzfahrzeugs und der Getriebestufen zwischen Verbrennungsmotor und den Zapfwellen kann die Zusatzzapfwelle unter bestimmten Betriebsbedingungen vom Verbrennungsmotor oder von der Arbeitszapfwelle antreibbar sein, wenn sich die Zusatzzapfwelle nicht in ihrem vorgenannten Unterstützungsmodus befindet. Grundsätzlich ist es auch möglich, dass die Arbeitszapfwelle und die Zusatzzapfwelle unabhängig voneinander betrieben und bei Bedarf (z.B. Unterstützungsmodus) auf definierte Weise miteinander gekoppelt werden.

Damit die Zusatzzapfwelle die Arbeitszapfwelle effizient unterstützen kann, ist die Energiespeicher-Vorrichtung insbesondere als eine Vorrichtung ausgebildet, welche eine Speicherung und geregelte bzw. gesteuerte Abgabe von Energie an die Zusatzzapfwelle ermöglicht.

Vorzugsweise versorgt die Energiespeicher-Vorrichtung die Zusatzzapfwelle dann mit Bewegungsenergie, wenn ein erhöhtes Lastmoment und/oder eine Lastmomentspitze an der Arbeitszapfwelle wirkt.

Grundsätzlich kann ein Energiespeicher der Energiespeicher-Vorrichtung auf unterschiedliche Art realisiert sein. Beispielsweise ist eine elektrischer Energiespeicherung, mechanische Energiespeicherung (z.B. mittels eines Federmechanismus) oder hydraulische Energiespeicherung (z.B. mittels Druckspeicher) denkbar.

In einer bevorzugten Ausführungsform weist die Energiespeicher-Vorrichtung einen Energiespeicher auf, der von der Zusatzzapfwelle (außerhalb des vorgenannten Unterstützungsmodus) selbst erzeugte Bewegungsenergie speichert. Dies vermeidet aufwändige, zusätzliche Energiequellen am Nutzfahrzeug und unterstützt den energiesparenden Charakter bei der erwünschten Unterstützung der Arbeitszapfwelle durch die Zusatzzapfwelle.

Vorzugsweise weist die Energiespeicher-Vorrichtung eine Schwungmasse auf. Die Schwungmasse kann Energie speichern und wieder abgeben. Insbesondere ist die Schwungmasse als ein Schwungrad ausgebildet. Für einen effizienten Einsatz der Schwungmasse kann diese einfach an die Zusatzzapfwelle angeschlossen werden. Sobald die Zusatzzapfwelle im Unterstützungsmodus mit der Arbeitszapfwelle gekoppelt ist, ergänzt die Schwungmasse der Zusatzzapfwelle das Antriebsmoment der Arbeitszapfwelle und somit die Arbeitsenergie des Arbeitsgerätes (z.B. einer Schwungmasse des Arbeitsgerätes). Im Vergleich zu einer entsprechend größeren Schwungmasse am Arbeitsgerät hat die Schwungmasse an der Zusatzzapfwelle den Vorteil, dass das Gesamt-Antriebsmoment geringer ist, da die Arbeitszapfwelle und die Zusatzzapfwelle unabhängig voneinander betrieben werden können und beispielsweise nur zum Ausgleich der Lastspitzen an der Arbeitszapfwelle miteinander gekoppelt werden.

In einer weiteren bevorzugten Ausführungsform weist die Energiespeicher-Vorrichtung einen elektrischen Energiespeicher auf. Dieser ist beispielweise als ein Superkondensator ausgebildet.

In diesem Zusammenhang ist es von Vorteil, den elektrischen Energiespeicher mit einer elektrischen Maschine zu verbinden welche mit der Zusatzzapfwelle gekoppelt ist. Dabei hat die elektrische Maschine zumindest eine Motorfunktion und kann elektrische Energie des Energiespeichers als Bewegungsenergie an die Zusatzzapfwelle abgeben.

Vorteilhaft hat die elektrische Maschine zusätzlich eine Generatorfunktion, so dass von der Zusatzzapfwelle außerhalb des Unterstützungsmodus erzeugte Bewegungsenergie automatisch als elektrische Energie gespeichert werden und bei Bedarf wieder als Bewegungsenergie an die Zusatzzapfwelle abgegeben werden kann. Hierdurch kann die elektrische Maschine beispielsweise abhängig von einer Betriebs-Information - von der z.B. zeitlich erwartete Lastmomente an der Arbeitszapfwelle abgeleitet werden - des Arbeitsgerätes angesteuert werden, um eine Motor- oder Generatorfunktion auszuüben.

Vorzugsweise ist die Arbeitszapfwelle als eine Heckzapfwelle und die Zusatzzapfwelle als eine Frontzapfwelle ausgebildet. Die Energiespeicher-Vorrichtung kann insbesondere abnehmbar sein, sodass diese wahlweise an der Front- oder Heckzapfwelle als Arbeitszapfwelle anbringbar ist, wobei die jeweils andere Zapfwelle die Zusatzzapfwelle bildet.

Vorteilhaft ist die Energiespeicher-Vorrichtung an oder in einem standardmäßig verfügbaren Kraftheber des Nutzfahrzeugs mechanisch stabil angeordnet. Außerdem kann dann der Abstand zwischen Zusatzzapfwelle und Energiespeicher-Vorrichtung klein gehalten und etwaige Verluste bei der Energieübertragung zwischen beiden Teilen gering gehalten werden.

Das Verfahren zum Antrieb einer Arbeitszapfwelle eines landwirtschaftlichen Nutzfahrzeugs geht wiederum davon aus, dass ein Verbrennungsmotor des Nutzfahrzeugs - insbesondere über eine geeignete Kupplung, Getriebestufe oder dergleichen - die Arbeitszapfwelle des Nutzfahrzeugs antreibt. Dabei werden mindestens folgende Verfahrensschritte durchgeführt:

Eine Betriebs-Information (z.B. Presskraft, Werkzeugstatus, Presskolbenposition, etc.) des aktiven bzw. in Betrieb befindlichen Arbeitsgerätes wird ermittelt. Abhängig von der Betriebs-Information wird ein Zeitpunkt oder Zeitraum definiert, in dem eine weitere Zapfwelle bzw. Zusatzzapfwelle des Nutzfahrzeugs mit der Arbeitszapfwelle derart gekoppelt wird, dass die Arbeitszapfwelle zusätzlich von der Zusatzzapfwelle angetrieben wird, wobei die Zusatzzapfwelle zu diesem Zweck von einer Energiespeicher-Vorrichtung mit Bewegungsenergie versorgt wird. Die Zusatzzapfwelle befindet sich also in definierten bzw. vorbestimmten Zeitpunkten bzw. Zeiträumen in einem Unterstützungsmodus zur Unterstützung des Drehantriebs der Arbeitszapfwelle. Bezüglich der Vorteile dieses Unterstützungsmodus (wie z.B. Ausgleich von auftretenden Spitzenlasten an der Arbeitszapfwelle, Reduzieren oder Vermeiden eines Abfallens der Drehzahl des Verbrennungsmotors und der Geschwindigkeit des Nutzfahrzeugs bei auftretenden Drehmoment- bzw. Lastspitzen an der Arbeitszapfwelle) wird auf die obigen Erläuterungen verwiesen.

Der vorgenannte Unterstützungsmodus der Zusatzzapfwelle wird vorzugsweise bei einer Großballenpresse als Arbeitsgerät verwendet. Bei der aktiven Großballenpresse entstehen durch den Presskolben große zyklische Spitzenlasten, welche über das Getriebe der Großballenpresse an die Arbeitszapfwelle des Nutzfahrzeugs weitergegeben werden. Die hieraus folgenden Drehmomentspitzen der Arbeitszapfwelle können im Unterstützungsmodus der Zusatzzapfwelle ausgeglichen werden.

Das erfindungsgemäße Nutzfahrzeug und das Antriebsverfahren für die Arbeitszapfwelle werden im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein landwirtschaftliches Nutzfahrzeug mit einem heckseitig schematisch dargestellten Arbeitsgerät,
- Fig. 2: eine blockschaltbildartige Darstellung eines Arbeitssystems bestehend aus Nutzfahrzeug und Arbeitsgerät gemäß Fig. 1, und
- Fig. 3: der frontseitige Bereich des Nutzfahrzeugs gemäß Fig. 1 in einer weiteren Ausführungsform.

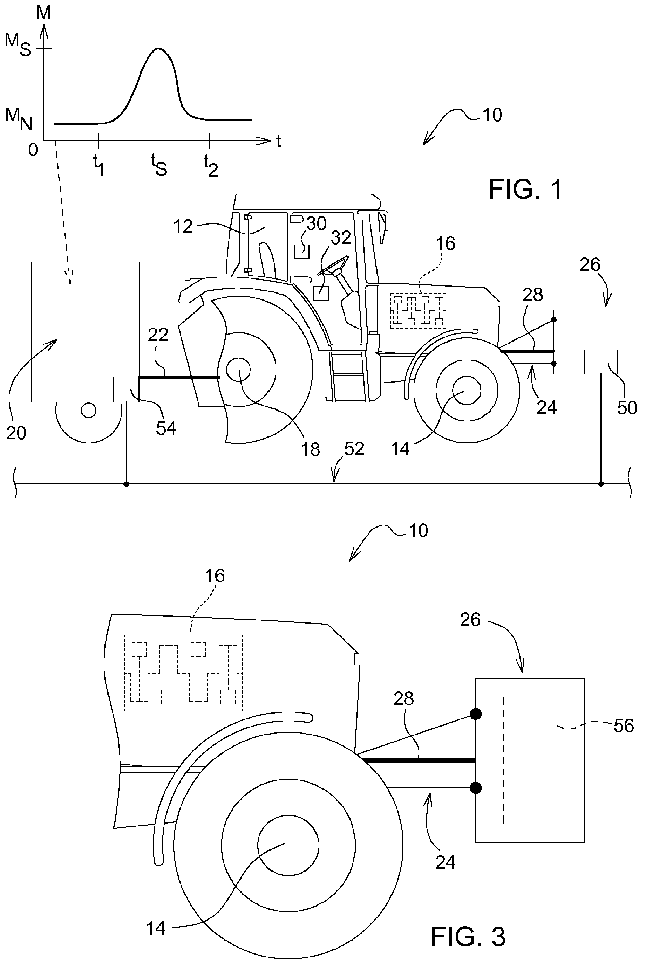

Fig. 1 zeigt ein landwirtschaftliches Nutzfahrzeug 10 in Form eines Traktors bzw. Schleppers mit einer Kabine, einer Vorderachse 14 und einem Verbrennungsmotor 16 für den Antrieb zumindest einer Hinterachse 18. An den Heckbereich des Nutzfahrzeugs 10 ist ein lediglich schematisch dargestelltes Arbeitsgerät 20 gekoppelt, welches bezüglich seiner Arbeitsfunktion mittels einer Heckzapfwelle (nachfolgend Arbeitszapfwelle 22) betrieben wird. Im Frontbereich des Nutzfahrzeugs 10 ist ein lediglich schematisch dargestellter Frontkraftheber 24 gelagert, der eine abnehmbare Energiespeicher-Vorrichtung 26 trägt. Die Energiespeicher-Vorrichtung 26 hat den Zweck, eine Frontzapfwelle (nachfolgend Arbeitszapfwelle 28) anzutreiben.

Im Bereich der Kabine 12 befinden sich unter anderem ein Bedienelement 30 zur Aktivierung und Deaktivierung der Arbeitszapfwelle 22 und ein Bedienelement 32 zur Aktivierung und Deaktivierung der Arbeitszapfwelle 28. Mittels der Bedienelemente 30, 32 kann ferner eine zugehörige Getriebeübersetzung vorgewählt wie auch die Zapfwellendrehzahl begrenzt werden.

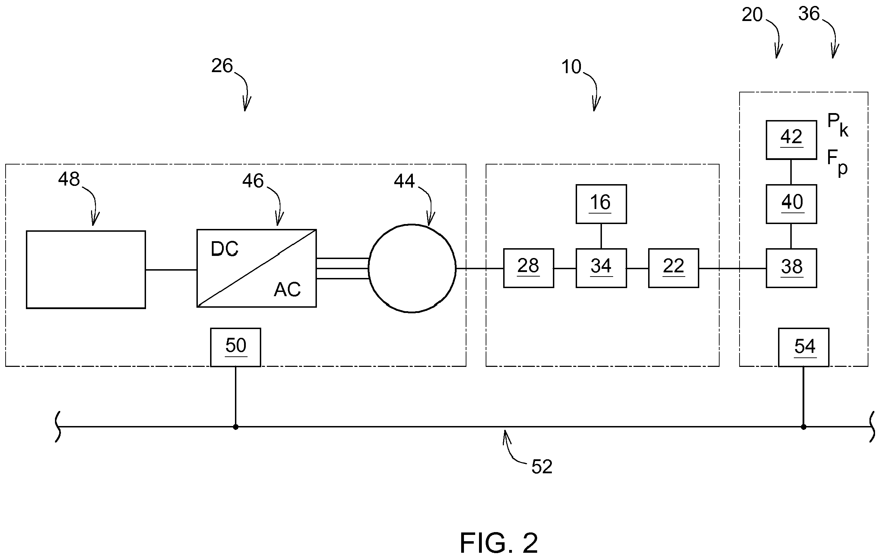

Fig. 2 zeigt schematisch einzelne Details für das Zusammenwirken des Nutzfahrzeugs 10 mit dem Arbeitsgerät 20. Die beiden Zapfwellen 22, 28 sind über eine geeignete Getriebevorrichtung 34 bzw. den Antriebsstrang des Nutzfahrzeugs unabhängig voneinander von dem Verbrennungsmotor 16 antreibbar.

Außerdem kann die Zusatzzapfwelle 28 über die Getriebevorrichtung 34 mit der Arbeitszapfwelle 22 derart gekoppelt sein, dass die Zusatzzapfwelle 28 einfach mit der Geschwindigkeit der Arbeitszapfwelle 22 mitläuft, die durch den Antrieb der Arbeitszapfwelle 22 seitens des Verbrennungsmotors 16 erzielt wird. Darüber hinaus kann die Zusatzzapfwelle 28 in einem Unterstützungsmodus mit der Arbeitszapfwelle 22 derart gekoppelt werden, dass die Arbeitszapfwelle 22 zu definierten Zeitpunkten oder Zeiträumen nicht nur von dem Verbrennungsmotor 16, sondern auch zusätzlich von der Zusatzzapfwelle 28 angetrieben wird, um erhöhte Lastmomente oder Lastmomentspitzen an der Arbeitszapfwelle 22 auszugleichen.

In Fig. 2 wird mittels der Arbeitszapfwelle 22 ein als Großballenpresse 36 ausgebildetes Arbeitsgerät 20 betrieben. Die Großballenpresse 36 enthält unter anderem ein Schwungrad 38, welches - ggf. unter Zwischenschaltung weiterer, hier nicht dargestellter Bauteile zur Kraftübertragung - antriebsmäßig mit der Arbeitszapfwelle 22 gekoppelt ist. An das Schwungrad 38 schließt sich ein Pressengetriebe 40 an, welches einen Presskolben 42 betätigt. Je nach Ausführung können zwischen dem Schwungrad 38, dem Pressengetriebe 40 und dem Presskolben 42 ggf. noch weitere, hier nicht dargestellte Bauteile zur Kraftübertragung vorgesehen sein.

Die Energiespeicher-Vorrichtung 26 gemäß Fig. 2 enthält eine als Motor und als Generator einsetzbare Wechselstrommaschine 44, einen AC/DC-Wandler 46, einen als Superkondensator ausgebildeten Energiespeicher 48 und eine Steuereinheit 50. Die Steuereinheit 50 ist über einen Datenbus 52 des Nutzfahrzeugs 10 mit einer Steuereinheit 54 des Arbeitsgerätes 20 bzw. der Großballenpresse 36 verbunden. Hierdurch kann die Steuereinheit 50 der Energiespeicher-Vorrichtung 26 Daten und Informationen über zu erwartende Lastzyklen des Arbeitsgerätes 20 bzw. der Großballenpresse 36 empfangen. Die Energiespeicher-Vorrichtung wird dann derart gesteuert, dass die Wechselstrommaschine 44 während eines Niedriglast-Zeitraumes (z.B. bei Drehmomenten M ungefähr M_{N}) als Generator wirksam ist, so dass an der Zusatzzapfwelle verfügbare mechanische Energie als elektrische Energie in dem Energiespeicher 48 gespeichert werden kann. Während der durch das Arbeitsgerät 20 bzw. die Großballenpresse 36 erzeugten erhöhten Last bzw. Spitzenlast (z.B. in dem Zeitraum t₁ bis t₂) arbeitet die Wechselstrommaschine 44 als Motor und gibt die gespeicherte Energie wieder an die Zusatzzapfwelle 28 ab, welche hierdurch in einem Unterstützungsmodus die Arbeitszapfwelle 22 zusätzlich antreibt. Die Steuereinheit 50 regelt dabei auf Basis empfangener bzw. ermittelter prädiktiver Lastinformationen des Arbeitsgerätes 20 bzw. der Großballenpresse 36 das Drehmoment der als Motor arbeitenden Wechselstrommaschine 44.

Bei der Großballenpresse 36 entstehen durch den Presskolben 42 hohe, zyklische Spitzenlasten, d.h. Drehmomente M, die größer als ein Niedriglastmoment M_{N} sind und ein Spitzendrehmoment M_{S} erreichen können (siehe schematisches Diagramm in Fig. 1), welche über das Pressengetriebe 40 an die Arbeitszapfwelle 22 des Nutzfahrzeugs 10 weitergegeben werden. Dies kann zu einem Abfallen der Drehzahl des Verbrennungsmotors 16 und einem Abfallen der Vorwärtsgeschwindigkeit des Nutzfahrzeugs 10 im Arbeitsbetrieb führen. Um diese erhöhten Lasten bzw. Spitzenlasten auszugleichen, wird die Arbeitszapfwelle 22 zu definierten Zeitpunkten bzw. Zeiträumen (z.B. t_{S} oder t₁ - t₂) zusätzlich von der Zusatzzapfwelle 28 angetrieben. Zu diesem Zweck wird bei der Ausführung gemäß Fig. 2 zunächst eine Betriebs-Information der aktiven Großballenpresse 36 ermittelt. Diese Betriebs-Information kann z.B. eine Position P_{K} und eine Presskraft F_{P} des Presskolbens 42 sein. Abhängig von dieser Betriebs-Information werden prädiktive Lastinformationen, insbesondere ein zu erwartendes Lastmoment M oder eine Lastspitze M > M_{N} und der zugehörige Zeitpunkt t₁, t_{S}, t₂ bzw. Zeitraum t₁ - t₂ ermittelt. Hierdurch können Zeitpunkte bzw. Zeiträume definiert werden, in denen die Zusatzzapfwelle 28 mit der Arbeitszapfwelle 22 derart gekoppelt und mit Bewegungsenergie versorgt ist, dass die Arbeitszapfwelle 22 zusätzlich von der Zusatzzapfwelle 28 angetrieben wird.

Während die Energiespeicher-Vorrichtung 26 gemäß Fig. 2 als eine elektrisch wirksame Schwungmasse bzw. elektrisch wirksames Schwungrad betrachtet werden kann, weist die Energiespeicher-Vorrichtung 26 bei der Ausführungsform gemäß Fig. 3 eine mechanische Schwungmasse 56 auf, welche an die Zusatzzapfwelle 28 angeschlossen ist.

## Patentansprüche

1. Landwirtschaftliches Nutzfahrzeug (10) mit
- einer mittels eines Verbrennungsmotors (16) antreibbaren Arbeitszapfwelle (22) für den Betrieb eines Arbeitsgerätes (20, 36), und
- einer Zusatzzapfwelle (28), welche von einer Energiespeicher-Vorrichtung (26) antreibbar ist und mit der Arbeitszapfwelle (22) derart gekoppelt ist, dass die Arbeitszapfwelle (22) zumindest zeitweise zusätzlich von der Zusatzzapfwelle (28) angetrieben ist.

2. Nutzfahrzeug nach Anspruch 1, **dadurch gekennzeichnet, dass** die Zusatzzapfwelle (28) als zusätzlicher Antrieb während eines erhöhten Lastmoments (M > M_{N}) und/oder während einer Lastmomentspitze (M_{S}) an der Arbeitszapfwelle (22) wirkt.

3. Nutzfahrzeug nach einem der vorhergehenden Ansprüche, **dadurch gekennzeichnet, dass** die Energiespeicher-Vorrichtung (26) einen Energiespeicher (48, 56) aufweist, welcher Bewegungsenergie der Zusatzzapfwelle (28) speichert.

4. Nutzfahrzeug nach Anspruch 3, **dadurch gekennzeichnet, dass** die Energiespeicher-Vorrichtung (26) eine Schwungmasse (56) aufweist.

5. Nutzfahrzeug nach Anspruch 3, **dadurch gekennzeichnet, dass** die Energiespeicher-Vorrichtung (26) einen elektrischen Energiespeicher (48) aufweist.

6. Nutzfahrzeug nach Anspruch 5, **dadurch gekennzeichnet, dass** die Energiespeicher-Vorrichtung (26) eine elektrische Maschine (44) aufweist, welche mit dem elektrischen Energiespeicher (48) verbunden und an die Zusatzzapfwelle (28) koppelbar ist.

7. Nutzfahrzeug nach Anspruch 6, **dadurch gekennzeichnet, dass** die elektrische Maschine (44) eine Motorfunktion und eine Generatorfunktion aufweist.

8. Nutzfahrzeug nach einem der vorhergehenden Ansprüche, **dadurch gekennzeichnet, dass** die Arbeitszapfwelle (22) als eine Heckzapfwelle und die Zusatzzapfwelle (28) als eine Frontzapfwelle ausgebildet ist.

9. Nutzfahrzeug nach einem der vorhergehenden Ansprüche, **dadurch gekennzeichnet, dass** die Energiespeicher-Vorrichtung (26) an oder in einem Kraftheber (24) des Nutzfahrzeugs (10) angeordnet ist.

10. Verfahren zum Antrieb einer Arbeitszapfwelle (22) eines landwirtschaftlichen Nutzfahrzeugs (10), wobei die von einem Verbrennungsmotor (16) des Nutzfahrzeugs (10) angetriebene Arbeitszapfwelle (28) ein Arbeitsgerät (20, 36) betreibt, und wobei eine Zusatzzapfwelle (28) des Nutzfahrzeugs (10) von einer Energiespeicher-Vorrichtung (26) antreibbar und mit der Arbeitszapfwelle (22) derart gekoppelt wird, dass die Arbeitszapfwelle (22) zumindest zeitweise zusätzlich von der Zusatzzapfwelle (28) angetrieben wird.

11. Verfahren nach Anspruch 10, **dadurch gekennzeichnet, dass**
- eine Betriebs-Information (P_{K}, F_{P}) des im Betrieb befindlichen Arbeitsgerätes (20, 36) ermittelt wird, und
- abhängig von der Betriebs-Information (P_{K}, F_{P}) ein Zeitpunkt (t₁, t₂, t_{S}) oder ein Zeitraum (t₁ - t₂) definiert wird, in dem die Zusatzzapfwelle (22) von der Arbeitszapfwelle (28) zusätzlich angetrieben wird.

12. Verfahren nach Anspruch 10 oder 11, **dadurch gekennzeichnet, dass** das Arbeitsgerät (20) als eine Großballenpresse (36) ausgebildet ist.
